# EUROPEAN PATENT SPECIFICATION

(11) **EP 2 074 355 B1**
(45) Date of publication and mention of the grant of the patent: **22.05.2013**
(21) Application number: 06847373.5
(22) Date of filing: 15.11.2006
(51) Int. Cl.: F24F 11/02, F25B 31/00

(54) **AIR CONDITIONER AND CONTROLLING METHOD FOR THE SAME**
KLIMAANLAGE UND STEUERVERFAHREN DAFÜR
CONDITIONNEUR D'AIR ET PROCÉDÉ DE COMMANDE DE CE DERNIER

(30) Priority: 11.10.2006 KR 20060098938
(43) Date of publication of application: 01.07.2009
(73) Proprietor: LG Electronics Inc., Seoul 150-721 (KR)
(72) Inventor: SONG, Chi Woo, Incheon-si 400-130 (KR); CHO, Nam Joon, Seongnam-si Gyeonggi-do 463-010 (KR); CHUNG, Baik Young, Incheon-si 407-310 (KR); CHANG, Se Dong, Gwangmyeong-si Gyeonggi-do 423-060 (KR)
(74) Representative: Urner, Peter
(86) International application number: PCT/KR2006/004807
(87) International publication number: WO 2008/044807

(56) References cited:
- EP-A2- 1 672 298
- JP-A- 2 196 176
- JP-A- 04 320 763
- JP-A- 05 141 808
- US-A1- 2004 231 357

## Description

### Technical Field

The present invention relates to air conditioners, and more particularly, to a device for recovering compressor oil of an air conditioner.

### Background Art

In general, the air conditioner cools or heats a room by performing a process of compressing, condensing, expanding, and evaporating refrigerant. In the air conditioners, there is a cooling type air conditioner, in which a refrigerating cycle is progressed only in one direction to supply cold air to the room, and cooling/heating type air conditioner, in which the refrigerating cycle is progressed in two directions selectively to supply cold air or heated air to the room.

Moreover, there are conventional air conditioners in which one indoor unit is connected to one outdoor unit, and air conditioners in which a plurality of indoor units are connected to the outdoor unit. In the meantime, the air conditioner may be an air conditioner which has at least one outdoor unit.

In the meantime, the outdoor unit of the air conditioner is provided with at least one compressor to deal with loads of the plurality of indoor units, and an oil separator connected to a refrigerant discharge pipeline of the compressor for separating oil from refrigerant from the compressor.

The compressor draws in and compresses low temperature, low pressure gaseous refrigerant into high temperature, high pressure gaseous refrigerant, and discharges therefrom. The compressor discharges the oil from the compressor together with the high temperature, high pressure refrigerant. The oil is separated from the high temperature, high pressure refrigerant at the oil separator, and returned to the compressor again.

In the meantime, in order to maintain the same oil quantity in each of the plurality of compressors during operation of the plurality of compressors, an oil equalizing operation is made at, for an example, two hour intervals.

In the oil equalizing operation, the oil flows from compressors having excessive oil to compressors having shortage of oil through an oil equalizing pipeline connected to bottoms of the compressors according to differences of inside pressures of the plurality of compressors.

However, the oil recovery in the related art air conditioner has the following problems.

In the related art air compressor, the oil equalizing operation made in two hour intervals in a state a cycle is in a steady state owing to regular operation of the plurality of compressors is liable to cause instability of the cycle, and drop of the indoor unit performance.

The drop of the indoor unit performance causes an overall efficiency of the air conditioner, to drop a performance of the room cooling/heating performance, at the end.

US 2004/0231357 A1 describes an oil equalizing circuit compression mechanism, a heat source unit for a freezing device, and a freezing device having the same. Herein, an air conditioning system comprises first, second and third compressors and an oil equalizing circuit. The oil equalizing circuit comprises first, second and third oil separators provided on the discharge side of each of the compressors. First, second and third oil return pipes are connected to the oil separators to the intake sides of the compressors. A communication pipe is provided for allowing the oil return pipes to communicate with one another. First, second and third oil ON-OFF switching means are provided downstream of the parts where the oil return pipes are connected to the communication pipe. Furthermore, first, second and third pressure reducing means are provided upstream of the parts where the oil return pipes are connected to the communication pipe. The air conditioning system is further provided with an oil equalization control means that detects if the first, second and third compressors are running or stopped and opens and closes the first, second and third oil ON-OFF switching means accordingly. More specifically, the oil equalization control means detects if the compressors are running or stopped, executes control to close the oil ON-OFF switching means corresponding to the stopped compressors so that oil does not flow to the intake side of the stopped compressors, and executes control to open the oil ON-OFF switching means corresponding to running compressors so that oil is supplied to the intake sides of the running compressors.

JP 2 196176 A describes an oil level controller and an oil separator in a refrigeration unit. Herein, two units of screw compressors are connected to each other operably in parallel, and each of oil separators severally connected to each discharge side of these compressors. These oil separators are made up of installing a separating element of a demister or the like in an oil separator body, while a discharge gas inlet pipe is connected to each discharge side of the compressors and a discharge outlet pipe to one discharge pipe via check valves, respectively. In this case, overflow ports are installed in the separator body at a proper oil level height position, and these ports are connected to an intermediate pressure parts of other compressors via oiling pipes provided with check valves and solenoid valves.

EP 1 672 298 A2 describes an air conditioner. Herein, an air conditioner comprises a single oil separator mounted on a confluent discharging channel, to which discharging channels are connected, which are provided at compressors. An electronic expansion valve, of which the opening level is controllable, is mounted on an oil collection pipe connected to the oil separator.

JP 4320763 A describes a freezer. Herein, each of a plurality of compressors is provided with oil separators. Return pipes for returning separated oil to each of the compressors are connected to these oil separators. The return pipes are connected to each other by a connection pipe. The connection pipe and/or return pipes are provided with valves for use in guiding a part of oil discharged from the compressors being operated to a compressor being stopped in the case that an amount of oil in the compressor being stopped is less than a predetermined value.

JP 5141808 A describes a refrigerating plant. Herein, each of compressors connected in parallel to each other is provided with oil separators, respectively. Oil return pipes are guided from upper and lower parts of these oil separators, and then these both oil return pipes are connected in parallel to each of the compressors. The lower oil return pipes are connected to each other through a connecting pipe. The lower oil return pipes and/or the connecting pipe are provided with a valve release when the oil amount within these compressors is less than the predetermined amount.

### Disclosure of Invention

An object of the present invention devised to solve the problem lies on providing an air conditioner and a method for controlling the same, in which non-uniform distribution of oil among a plurality of compressors can be prevented without disturbance of a cycle.

This object is solved by the air conditioner according to claim 1 and the method according to claim 7. Further advantages, refinements and embodiments of the invention are described in the respective sub-claims.

An air conditioner includes a plurality of compressors operated continuously for continuous cyclic operation, oil separators for separating oil from refrigerant from the compressors and supplying the oil to the compressors again, and an oil distributor for selective supply of the oil from the oil separators to some of the plurality of compressors.

The oil distributor may includes connection pipes connected between the compressors and the oil separators, measuring sensors for measuring quantities of oil in the compressors, oil valves on the connection pipes, and a microcomputer for controlling the oil valves with reference to data measured at the measuring sensors.

The plurality of compressors may include a constant speed compressor and an inverter compressor, and the oil separator includes first oil separator connected to the constant speed compressor, and a second oil separator connected to the inverter compressor.

The connection pipe may include a first connection pipe connected between the first oil separator and the constant speed compressor, a second connection pipe connected between the second oil separator and the inverter compressor, and a bypass pipe connected between the first connection pipe and the second connection pipe.

The oil valve may include a first oil valve on the first connection pipe, a second oil valve on the second connection pipe, and a bypass oil valve on the bypass pipe.

The measuring sensor may include a first measuring sensor for sensing an oil quantity in the constant speed compressor, and a second measuring sensor for sensing an oil quantity in the inverter compressor.

The oil valves may be solenoid valves each for selective turn off of an oil flow.

In a case the oil is supplied only to the constant speed compressor, the first oil valve is opened, the second oil valve is closed, and the bypass oil valve is opened.

In a case the oil is supplied only to the inverter compressor, the first oil valve is closed, the second oil valve is opened, and the bypass oil valve is opened.

A method for controlling an air conditioner includes the steps of separating oil from refrigerant from a plurality of compressors operated continuously at oil separators, and supplying oil from the oil separators to some of the plurality of compressors selectively.

The method may further include the step of measuring oil quantities in the plurality of compressors.

The step of supplying oil may include the step of supplying oil to the compressors with reference to an oil quantity measured in the step of measuring oil quantities.

In a case the oil is supplied only to the constant speed compressors among the plurality of compressors having constant pressure compressors and inverter compressors, the step for supplying oil may include the step of opening the first oil valve on the first connection pipe connected between the constant speed compressor and the oil separator, closing the second oil valve on the second connection pipe connected between the inverter compressor and the oil separator, and opening the bypass oil valve on the bypass pipe connected between the first connection pipe and the second connection pipe.

In a case the oil is supplied only to the inverter compressors among the plurality of compressors having constant pressure compressors and inverter compressors, the step for supplying oil may include the step of closing the first oil valve on the first connection pipe connected between the constant speed compressor and the oil separator, opening the second oil valve on the second connection pipe connected between the inverter compressor and the oil separator, and opening the bypass oil valve on the bypass pipe connected between the first connection pipe and the second connection pipe.

### Advantageous Effects

As has been described, the air conditioner of the present invention has the following advantages.

The air conditioner of the present invention enables to prevent non-uniform distribution of oil among compressors from taking place without change of a cycle by selective supply of oil only to a compressor having shortage of the oil among a plurality of compressors under continuous operation,

Moreover, because an operation state of compressors needs not be changed for making a separate oil equalizing operation in a state a cycle is stabilized, a continuous cyclic operation is possible, permitting a stable cooling or heating operation.

At the end, the drop both of the indoor unit performance and the cooling/heating performance can be prevented.

### Brief Description of the Drawings

The accompanying drawings, which are included to provide a further understanding of the invention, illustrate embodiments of the invention and together with the description serve to explain the principle of the invention.

In the drawings:
FIG. 1 illustrates a perspective view of an air conditioner in accordance with a preferred embodiment of the present invention, with partial cut-away views.
FIG. 2 illustrates a system diagram of a room cooling operation cycle of the air conditioner in FIG. 1, schematically.
FIG. 3 illustrates a state diagram of a process for recovering oil in the air conditioner in FIG. 2 in accordance with a preferred embodiment of the present invention.
FIG. 4 illustrates a state diagram of a process for recovering oil in the air conditioner in FIG. 2 in accordance with another preferred embodiment of the present invention.
FIG. 5 illustrates a state diagram of a process for recovering oil in the air conditioner in FIG. 2 in accordance with another preferred embodiment of the present invention.

### <Description of symbols for key parts in the drawings>

51, 52, 53, and 54: indoor units 80: outdoor unit
83: constant speed compressor 84: inverter compressor
85, and 86: oil separators 100: refrigerant pipeline
201: first measuring sensor 203: second measuring sensor
510: first connection pipe 530: second connection pipe
550: bypass pipe

### Best Mode for Carrying Out the Invention

Reference will now be made in detail to the preferred embodiments of the present invention, examples of which are illustrated in the accompanying drawings.

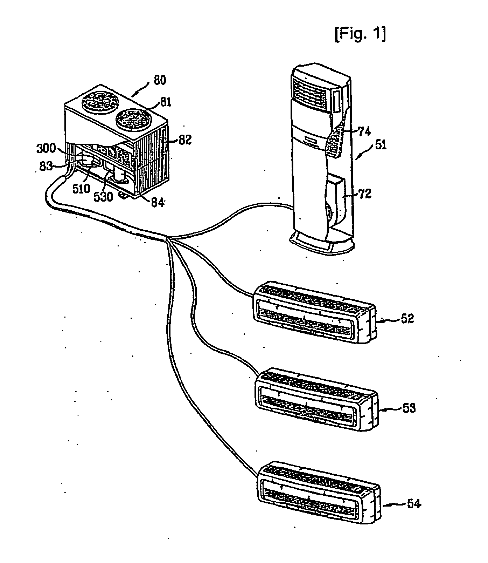

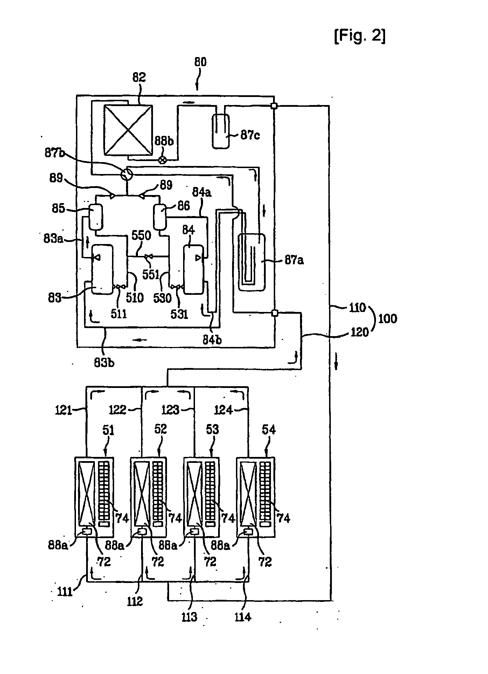

FIG. 1 illustrates a perspective view of an air conditioner in accordance with a preferred embodiment of the present invention, with partial cut-away views, and FIG. 2 illustrates a system diagram of a room cooling operation cycle of the air conditioner in FIG. 1, schematically.

Referring to FIGS. 1 and 2, the air conditioner includes an outdoor unit 80, a plurality of indoor units 51, 52, 53, and 54, and a refrigerant pipeline 100 connected between the outdoor unit 80 and the indoor units 51, 52, 53, and 54.

The refrigerant pipeline 100 has a first refrigerant pipeline 110 with one end connected to a receiver 87c and the other end split into a plurality of branch pipelines 111, 112, 113, and 114 connected to one ends of the indoor units 51, 52, 53, and 54 respectively, and a second refrigerant pipeline 120 with one end connected to an accumulator 87a and the other end split into a plurality of branch pipelines 121, 122, 123, and 124 connected to the other ends of the indoor units 51, 52, 53, and 54.

The refrigerant passed through the indoor units 51, 52, 53, and 54 via the first refrigerant pipeline 110 is joined together, and flows toward the outdoor unit 80 through the second refrigerant pipeline 120.

Each of the indoor units 51, 52, 53, and 54 includes an outdoor fan 74 for drawing air from the room to the indoor unit 51, 52, 53, or 54 and discharging the air to the room again, and an indoor heat exchanger 72 for making the air drawn into the indoor units 51, 52, 53, or 54 to heat exchange with the refrigerant, to heat or cool the air.

The outdoor unit 80 includes an indoor fan 81 for drawing outdoor air into the outdoor unit and discharging to an outside of the outdoor unit again, an outdoor heat exchanger 82 for making the air drawn by the indoor fan 81 to heat exchange with the refrigerant, and a plurality of compressors 83, and 84 for compressing the refrigerant.

Though not shown, each of the plurality of compressors 83, and 84 includes a compression unit having a compression chamber for compressing the refrigerant, a motor unit for compressing the compression chamber, and an oil pump for pumping oil to the motor unit or the compression unit.

The plurality of compressors 83, and 84 include a constant speed compressor 83 having a constant speed, and an inverter compressor 84 having a variable capacity, so that only the inverter compressor 84 is driven in correspondence to the loads of the indoor units 51, 52, S3, and 54 if the loads of the indoor units 51, 52, 53, and 54 are low, for an example, one or two of the indoor units 51, 52, 53, and 54 are in operation.

Opposite to this, if the loads of the indoor units 51, 52, 53, and 54 are relatively high, for an example, three or for of the indoor units 51, 52, 53, and 54 are in operation, it is preferable that the constant speed compressor 83 is driven together with the inverter compressor 84.

The air conditioner of the present invention further includes a common accumulator 87a in the outdoor unit 80 connected to a refrigerant suction pipeline 83b and 84b of the constant speed compressor 83 and the inverter compressor 84 for accumulating liquid refrigerant for introduction of only gaseous refrigerant to the constant speed compressor 83 and the inverter compressor 84.

The air conditioner of the present invention further includes a four-way valve 87b in the outdoor unit 80 for changing a flow path of the refrigerant passed through the oil separator 85, and 86 to the indoor heat exchanger 72 or the outdoor heat exchanger 82, so that the plurality of indoor units 51, 52, 53, and 54 can be used as room coolers or room heaters.

The air conditioner of the present invention further includes a receiver 87c in the outdoor unit 80 for holding surplus refrigerant and making only liquid refrigerant to circulate through the indoor units in the room cooling operation.

The air conditioner of the present invention further includes an electronic expansion valve 88a on the refrigerant pipeline 100 between the outdoor heat exchanger 82 and the indoor heat exchanger 72 for expanding the refrigerant passed through the outdoor heat exchanger 82 or the indoor heat exchanger 72 to low temperature, low pressure refrigerant, and an electronic expansion valve 88a in the outdoor unit 80 for regulating a refrigerant flow passage to regulate a flow rate of the refrigerant circulating in a refrigerating cycle.

The air conditioner of the present invention further includes check valves 89 at refrigerant outlet pipes 83a, and 84a of the constant speed compressor 83 and the inverter compressor 84 for preventing the refrigerant or the oil from flowing in a reverse direction.

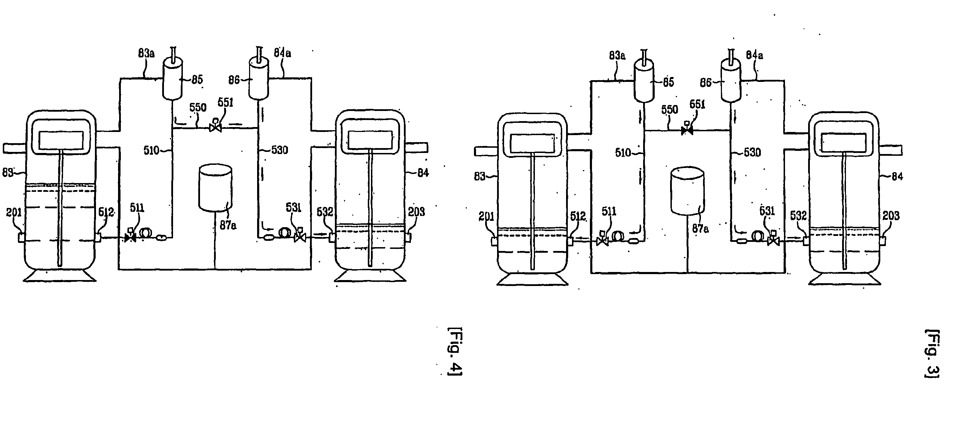

Referring to FIGS. 2 and 3, the air conditioner of the present invention includes a plurality of compressors 83, and 84 operated continuously for continuous cyclic operation, oil separators 85, and 86 for separating oil from the refrigerant from the compressors and returning the oil to the compressors again, and an oil distributor for selective supply of the oil separated at the oil separators 85, and 86 to some of the plurality of the compressors 85, and 86.

The plurality of compressors include a constant speed compressor 83 and an inverter compressor 84, and the oil separators include a first oil separator 85 connected to the constant speed compressor 83, and a second oil separator 86 connected to the inverter compressors.

The oil distributor includes connection pipes 510, 530, and 550 connected between the compressors and the oil, separators, measuring sensors 201, and 203 for measuring quantities of oil in the compressors, oil valves 511, 531, and 551 on the connection pipes, and a microcomputer (not shown) for controlling the oil valves with reference to data measured at the measuring sensors.

The connection pipes 510, 530, and 550 includes a first connection pipe 510 connected between the first oil separator 85 and the constant speed compressor 83, a second connection pipe 530 connected between the second oil separator 86 and the inverter compressor 84, and a bypass pipe 550 connected between the first connection pipe 510 and the second connection pipe 530.

The first connection pipe 510 and the second connection pipe 530 have portions each provided with a capillary tube. The capillary tube serves to expand the oil. The measuring sensors 201, and 203 include a first measuring sensor 201 for sensing an oil quantity in the constant speed compressor 83, and a second measuring sensor 203 for sensing an oil quantity in the inverter compressor 84.

The oil valves 511, 531, and 551 include a first oil valve 511 on the first connection pipe 510, a second oil valve 531 on the second oil connection pipe 530, and a bypass oil valve 551 on the bypass pipe 550.

It is preferable that the oil valves 511, 531, and 551 are solenoid valves for selective cutting off of an oil flow.

It is preferable that the first connection pipe 510 is connected to one side of a bottom of the constant speed compressor 83 through a first oil supply port 512, and the second connection pipe 530 is connected to one side of a bottom of the inverter compressor 84 through a second oil supply port 532.

A method for recovering oil of the air conditioner in accordance with a preferred embodiment of the present invention includes the steps of separating oil from refrigerant from a plurality of continuously operated compressors by using oil separators, and selectively supplying oil separated at the oil separators to some of the plurality of compressors. Of course, the method may further include the step of measuring oil quantities in the plurality of compressors

In detail, if the plurality of compressors in the outdoor unit are operated, the plurality of compressors 83, and 84 compresses the refrigerant to high temperature, and high pressure, and discharges to the refrigerant outlet pipes 83a, and 84a together with oil in the compressors, to introduce the refrigerant and the oil into the oil separators 85, and 86.

Then, the oil separators separate the oil from the refrigerant. In this instance, referring to FIG. 3, the measuring sensors 201, and 203 in the plurality of compressors 83, and 84 measure oil quantities in the plurality of compressors in advance respectively, and transmit data on the oil quantities to the microcomputer.

In this instance, if the oil quantities are equal, the microcomputer opens the first oil valve 511 on the first connection pipe 510 and the second oil valve 531 on the second connection pipe 530, and closes the bypass oil valve 551 on the bypass pipe 550.

Then, the oil separated at the first oil separator 85 is introduced into the constant speed compressor 83, and the oil separated at the second oil separator 86 is introduced into the inverter compressor 84 through the second connection pipe 530.

In the meantime, if one of the plurality of compressors has shortage of oil, for an example, as shown in FIG. 4, the inverter compressor 84 has shortage of oil, the microcomputer turns off the first oil valve 511 on the first connection pipe 510, and opens the second oil valve 531 on the second connection pipe 530, and the bypass oil valve 551 on the bypass pipe 550.

Then, the oil from the first oil separator passes through the bypass pipe 550 via a portion of the first connection pipe 510. The oil passed through the bypass pipe 550 is mixed with the oil from the second oil separator at the second connection pipe, flows along the second connection pipe 530 and is supplied to the inverter compressor 84.

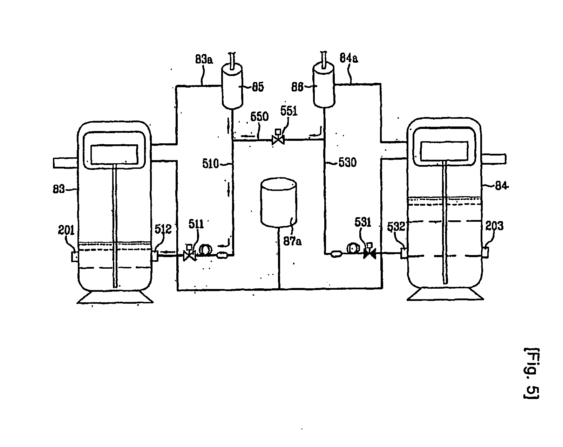

In the meantime, referring to FIG. 5, if the constant speed compressor has shortage of oil, the microcomputer closes the second oil valve 531 on the second connection pipe 530, and opens the first oil valve 511 on the first connection pipe 510 and the bypass oil valve 551 on the bypass pipe 550.

Then, the oil from the second oil separator 86 passes through the bypass pipe 550 via a portion of the second connection pipe 530. The oil passed through the bypass pipe 550 is mixed with the oil from the first oil separator 85 at the first connection pipe 510, flows along the first connection pipe 510, and is supplied to the constant speed compressor 83.

If the oil quantities in the constant speed compressor 83 and the inverter compressor 84 become equal during repeating above processes, the air conditioner turns on the first oil valve 511 and the second oil valve 531 and turns off the bypass oil valve 551. Accordingly, the oil from the first oil separator 85 is supplied to the constant speed compressor 83 through the first connection pipe 510, and the oil from the second oil separator 83 is supplied to the inverter compressor 84 through the second connection pipe 530.

Thus, as described before, the air conditioner of the present invention can prevent non-uniform distribution of oil among the plurality of compressors from taking place by supplying more oil to a compressor which has shortage of oil by operating solenoid valves according to a difference of oil quantities among the plurality of compressors without making an oil equalizing operation, separately.

### Industrial Applicability

Since the air conditioner of the present invention enables stable operation by supplying oil to the plurality of compressors uniformly while changing no operation cycle, i.e., without changing operation states of the compressors, the air conditioner of the present invention has a wide industrial applicability.

## Claims

1. An air conditioner comprising:
- first (83) and second (84) compressors operated continuously for continuous cyclic operation, wherein the first (83) and the second (84) compressors include a constant speed compressor (83) and an inverter compressor (84);
- first (85) and second (86) oil separators for separating oil from refrigerant from the first (83) and the second (84) compressors, respectively, and for supplying the oil to the first (83) and the second (84) compressors again via first (510) and second (530) connection pipes, respectively;
- a bypass pipe (550) connected between the first connection pipe (510) and the second connection pipe (530);
- measuring sensors for measuring quantities of oil in the first (83) and the second (84) compressors; and
- a microcomputer for controlling a first oil valve (511) on the first connection pipe (510), a second oil valve (531) on the second connection pipe (530) and a bypass oil valve (551) on the bypass pipe (550) with reference to data measured at the measuring sensors, wherein if the oil quantities in the first (83) and the second (84) compressors are equal, the microcomputer opens the first oil valve (511) and the second oil valve (531) and closes the bypass oil valve (551), and if the first (83) or the second (84) compressor has shortage of oil, the microcomputer opens the bypass oil valve (551), opens or closes the first oil valve (511), and closes or opens the second oil valve (531), respectively.

2. The air conditioner as claimed in claim 1, wherein the first connection pipe (510) is connected between the first oil separator (85) and the constant speed compressor (83) and the second connection pipe (530) is connected between the second oil separator (86) and the inverter compressor (84).

3. The air conditioner as claimed in claim 2, wherein the measuring sensors include a first measuring sensor (201) for sensing an oil quantity in the constant speed compressor (83), and a second measuring sensor (203) for sensing an oil quantity in the inverter compressor (84).

4. The air conditioner as claimed in one of the preceding claims, wherein the oil valves (511, 531, 551) are solenoid valves each for selective turn off of an oil flow.

5. The air conditioner as claimed in any one of claims 1 to 4, wherein, in a case the oil is supplied only to the constant speed compressor (83), the first oil valve (511) is opened, the second oil valve (531) is closed, and the bypass oil valve (551) is opened.

6. The air conditioner as claimed in claim 4, wherein, in a case the oil is supplied only to the inverter compressor (84), the first oil valve (511) is closed, the second oil valve (531) is opened, and the bypass oil valve (551) is opened.

7. A method for controlling an air conditioner comprising the steps of:
- separating oil from refrigerant from first (83) and second (84) compressors having constant speed compressors and inverter compressors operated continuously at first (85) and second (86) oil separators, respectively;
- measuring oil quantities in the first (83) and the second (84) compressors; and
- introducing oil separated at the first oil separator (85) into the first compressor (83), and introducing oil separated on the second oil separator (86) into the second compressor (84), if the oil quantities of the first (83) and the second (84) compressors are equal; and
- introducing oil separated at the first oil separator (85) into the second compressor (84), if the second compressor (84) has shortage of oil; and
- introducing oil separated at the second oil separator (86) into the first compressor (83), if the first compressor (83) has shortage of oil.

8. The method as claimed in claim 7, wherein, in a case the oil is supplied only to a constant speed compressor (83) among the first and second compressors (83, 84), the step for supplying oil includes the step of opening a first oil valve (511) on a first connection pipe (510) connected between the constant speed compressor (83) and the first oil separator (85), closing a second oil valve (531) on a second connection pipe (530) connected between the inverter compressor (84) and the second oil separator (85), and opening a bypass oil valve (551) on a bypass pipe (550) connected between the first connection pipe (510) and the second connection pipe (530).

9. The method as claimed in claims 7 or 8, wherein, in a case the oil is supplied only to an inverter compressor (84) among the first and second compressors (83, 84), the step for supplying oil includes the step of closing a first oil valve (511) on a first connection pipe (510) connected between the constant speed compressor (83) and the first oil separator (85), opening a second oil valve (531) on a second connection pipe (530) connected between the inverter compressor (84) and the second oil separator (86), and opening a bypass oil valve (551) on a bypass pipe (550) connected between the first connection pipe (510) and the second connection pipe (530).

## Patentansprüche

1. Klimaanlage, die umfasst:
- einen ersten (83) und einen zweiten (84) Kompressor, die für einen ununterbrochenen zyklischen Betrieb ununterbrochen betrieben werden, wobei der erste (83) und der zweite (84) Kompressor einen Konstantdrehzahlkompressor (83) und einen Inverterkompressor (84) umfassen;
- einen ersten (85) und einen zweiten (86) Ölabscheider, um Öl von dem Kühlmittel von dem ersten (83) bzw. dem zweiten (84) Kompressor abzuscheiden und um das Öl dem ersten (83) bzw. dem zweiten (84) Kompressor über ein erstes (510) bzw. ein zweites (530) Verbindungsrohr wieder zuzuführen;
- ein Umgehungsrohr (550), das zwischen dem ersten Verbindungsrohr (510) und dem zweiten Verbindungsrohr (530) angeschlossen ist;
- Messsensoren zum Messen der Ölmengen in dem ersten (83) und dem zweiten (84) Kompressor; und
- einen Mikrocomputer, um ein erstes Ölventil (511) in dem ersten Verbindungsrohr (510), ein zweites Ölventil (531) in dem zweiten Verbindungsrohr (530) und ein Umgehungsölventil (551) in dem Umgehungsrohr (550) in Bezug auf Daten, die bei den Messsensoren gemessen werden, zu steuern, wobei dann, wenn die Ölmengen in dem ersten (83) und dem zweiten (84) Kompressor gleich sind, der Mikrocomputer das erste Ölventil (511) und das zweite Ölventil (531) öffnet und das Umgehungsölventil (551) schließt und dann, wenn der erste (83) oder der zweite (84) Kompressor einen Ölmangel haben, der Mikrocomputer das Umgehungsölventil (551) öffnet, das erste Ölventil (511) öffnet oder schließt bzw. das zweite Ölventil (531) schließt oder öffnet.

2. Klimaanlage nach Anspruch 1, wobei das erste Verbindungsrohr (510) zwischen dem ersten Ölabscheider (85) und dem Konstantdrehzahlkompressor (83) angeschlossen ist und das zweite Verbindungsrohr (530) zwischen dem zweiten Ölabscheider (86) und dem Inverterkompressor (84) angeschlossen ist.

3. Klimaanlage nach Anspruch 2, wobei die Messsensoren einen ersten Messsensor (201) zum Erfassen einer Ölmenge in dem Konstantdrehzahlkompressor (83) und einen zweiten Messsensor (203) zum Erfassen einer Ölmenge in dem Inverterkompressor (84) enthalten.

4. Klimaanlage nach einem der vorhergehenden Ansprüche, wobei die Ölventile (511, 531, 551) Solenoidventile sind, wovon jedes zum wahlweisen Unterbrechen einer Ölströmung vorgesehen ist.

5. Klimaanlage nach einem der Ansprüche 1 bis 4, wobei in einem Fall, in dem Öl nur dem Konstantdrehzahlkompressor (83) zugeführt wird, das erste Ölventil (511) geöffnet ist, das zweite Ölventil (531) geschlossen ist und das Umgehungsölventil (551) geöffnet ist.

6. Klimaanlage nach Anspruch 4, wobei in einem Fall, in dem das Öl nur dem Inverterkompressor (84) zugeführt wird, das erste Ölventil (511) geschlossen ist, das zweite Ölventil (531) geöffnet ist und das Umgehungsölventil (551) geöffnet ist.

7. Verfahren zum Steuern einer Klimaanlage, das die folgenden Schritte umfasst:
- Abscheiden von Öl von einem ersten (83) und einem zweiten (84) Kompressor, die einen Konstantdrehzahlkompressor und einen Inverterkompressor, die bei einem ersten (85) bzw. einem zweiten (86) Ölabscheider ununterbrochen betrieben werden, umfassen;
- Messen von Ölmengen in dem ersten (83) und dem zweiten (84) Kompressor; und
- Einleiten von Öl, das bei dem ersten Ölabscheider (85) abgeschieden wird, in den ersten Kompressor (83) und Einleiten von Öl, das bei dem zweiten Ölabscheider (86) abgeschieden wird, in den zweiten Kompressor (84), falls die Ölmengen des ersten (83) und des zweiten (84) Kompressors gleich sind; und
- Einleiten von Öl, das bei dem ersten Ölabscheider (85) abgeschieden wird, in den zweiten Kompressor (84), falls der zweite Kompressor (84) einen Ölmangel hat; und
- Einleiten von Öl, das bei dem zweiten Ölabscheider (86) abgeschieden wird, in den ersten Kompressor (83), falls der erste Kompressor (83) einen Ölmangel hat.

8. Verfahren nach Anspruch 7, wobei in einem Fall, in dem Öl nur einem Konstantdrehzahlkompressor (83) unter dem ersten und dem zweiten Kompressor (83, 84) zugeführt wird, der Schritt der Ölzuführung den Schritt des Öffnens eines ersten Ölventils (511) in einem ersten Verbindungsrohr (510), das zwischen dem Konstantdrehzahlkompressor (83) und dem ersten Ölabscheider (85) angeschlossen ist, das Schließen eines zweiten Ölventils (531) in einem zweiten Verbindungsrohr (530), das zwischen dem Inverterkompressor (84) und dem zweiten Ölabscheider (85) angeschlossen ist, und das Öffnen eines Umgehungsölventils (551) in einem Umgehungsrohr (550), das zwischen dem ersten Verbindungsrohr (510) und dem zweiten Verbindungsrohr (530) angeschlossen ist, umfasst.

9. Verfahren nach den Ansprüchen 7 oder 8, wobei in einem Fall, in dem das Öl nur einem Inverterkompressor (84) unter dem ersten und dem zweiten Kompressor (83, 84) zugeführt wird, der Schritt der Ölzuführung den Schritt des Schließens eines ersten Ölventils (511) in einem ersten Verbindungsrohr (510), das zwischen dem Konstantdrehzahlkompressor (83) und dem ersten Ölabscheider (85) angeschlossen ist, das Öffnen eines zweiten Ölventils (531) in einem zweiten Verbindungsrohr (530), das zwischen dem Inverterkompressor (84) und dem zweiten Ölabscheider (86) angeschlossen ist, und das Öffnen eines Umgehungsölventils (551) in einem Umgehungsrohr (550), das zwischen dem ersten Verbindungsrohr (510) und dem zweiten Verbindungsrohr (530) angeschlossen ist, umfasst.

## Revendications

1. Appareil de conditionnement d'air, comprenant :
- un premier (83) et un second (84) compresseur qui fonctionnent en continu pour une opération cyclique continue, dans lesquels le premier (83) et le second (84) compresseur incluent un compresseur à vitesse constante (83) et un compresseur inverseur (84) ;
- un premier (85) et un second (86) séparateur d'huile pour séparer l'huile depuis le réfrigérant hors du premier (83) et du second (84) compresseur, respectivement, et pour fournir l'huile au premier (83) et au second (84) compresseur à nouveau via un premier (510) et un second (530) tube de connexion, respectivement ;
- un tube de by-pass (550) connecté entre le premier tube de connexion (510) et le second tube de connexion (530) ;
- des capteurs de mesure pour mesurer des quantités d'huile dans le premier (83) et le second (84) compresseur ; et
- un microordinateur pour commander une première valve à huile (511) sur le premier tube de connexion (510), une seconde valve à huile (531) sur le second tube de connexion (530) et une valve à huile de by-pass (551) sur le tube de by-pass (550) en se référant à des données mesurées au niveau des capteurs de mesure, dans lequel si les quantités d'huile dans le premier (83) et le second (84) compresseurs sont égales, le micro-ordinateur ouvre la première valve à huile (511) et la seconde valve à huile (531) et ferme la valve à huile de by-pass (551), et si le premier (83) ou le second (84) compresseur vient à manquer d'huile, le micro-ordinateur ouvre la valve à huile de by-pass (551), ouvre ou ferme la première valve à huile (511), et ferme ou ouvre la seconde valve à huile (531), respectivement.

2. Appareil de conditionnement d'air selon la revendication 1, dans lequel le premier tube de connexion (510) est connecté entre le premier séparateur d'huile (85) et le compresseur à vitesse constante (83), et le second tube de connexion (530) est connecté entre le second séparateur d'huile (86) et le compresseur inverseur (84).

3. Appareil de conditionnement d'air selon la revendication 2, dans lequel les capteurs de mesure incluent un premier capteur de mesure (201) pour détecter une quantité d'huile dans le compresseur à vitesse constante (83), et un second capteur de mesure (203) pour détecter une quantité d'huile dans le compresseur inverseur (84).

4. Appareil de conditionnement d'air selon l'une des revendications précédentes, dans lequel les valves à huile (511, 531, 551) sont des valves solénoïdes destinées chacune à couper sélectivement un écoulement d'huile.

5. Appareil de conditionnement d'air selon l'une quelconque des revendications 1 à 4, dans lequel, dans un cas où l'huile est fournie uniquement au compresseur à vitesse constante (83), la première valve à huile (511) est ouverte, la seconde valve à huile (531) est fermée, et la valve à huile de by-pass (551) est ouverte.

6. Appareil de conditionnement d'air selon la revendication 4, dans lequel, dans un cas où l'huile est fournie uniquement au compresseur inverseur (84), la première valve à huile (511) est fermée, la seconde valve à huile (531) est ouverte, et la valve à huile de by-pass (551) est ouverte.

7. Procédé pour commander un appareil de conditionnement d'air comprenant les étapes consistant à :
- séparer l'huile depuis le réfrigérant hors d'un premier (83) et d'un second (84) compresseur ayant des compresseurs à vitesse constante et des compresseurs inverseurs qui fonctionnent en continu, au niveau d'un premier (85) et d'un second (86) séparateur d'huile, respectivement ;
- mesurer l'quantité d'huile dans le premier (83) et le second (84) compresseur ; et
- introduire l'huile séparée au niveau du premier séparateur d'huile (85) dans le premier compresseur (83), et introduire l'huile séparée sur le second séparateur d'huile (86) dans le second compresseur (84) si les quantités d'huile du premier (83) et du second (84) compresseurs sont égales ; et
- introduire l'huile séparée au niveau du premier séparateur d'huile (85) dans le second compresseur (84) si le second compresseur (84) vient à court d'huile ; et
- introduire l'huile séparée au niveau du second séparateur d'huile (86) dans le premier compresseur (83) si le premier compresseur (83) vient à court d'huile.

8. Procédé selon la revendication 7, dans lequel, dans un cas où l'huile est fournie uniquement à un compresseur à vitesse constante (83) parmi le premier et le second compresseur (83, 84), l'étape pour la fourniture d'huile inclut l'étape consistant à ouvrir une première valve à huile (511) sur un premier tube de connexion (510) connecté entre le compresseur à vitesse constante (83) et le premier séparateur d'huile (85), à fermer une seconde valve à huile (531) sur un second tube de connexion (530) connecté entre le compresseur inverseur (84) et le second séparateur d'huile (85), et à ouvrir une valve à huile de by-pass (551) sur un tube de by-pass (550) connecté entre le premier tube de connexion (510) et le second tube de connexion (530).

9. Procédé selon les revendications 7 ou 8, dans lequel, dans un cas où l'huile est fournie uniquement à un compresseur inverseur (84) parmi le premier et le second compresseur (83, 84), l'étape pour la fourniture d'huile inclut l'étape consistant à fermer une première valve à huile (511) sur un premier tube de connexion (510) connecté entre le compresseur à vitesse constante (83) et le premier séparateur d'huile (85), à ouvrir une seconde valve à huile (531) sur un second tube de connexion (530) connecté entre le compresseur inverseur (84) et le second séparateur d'huile (86), et à ouvrir une valve à huile de by-pass (551) sur un tube de by-pass (550) connecté entre le premier tube de connexion (510) et le second tube de connexion (530).
